# FASCICULE DE BREVET EUROPEEN

(11) **EP 0 970 605 B1**
(45) Date de publication et mention de la délivrance du brevet: **20.03.2002**
(21) Numéro de dépôt: 99401552.7
(22) Date de dépôt: 23.06.1999
(51) Int. Cl.: A01K 7/06

(54) **Bol d'abreuvement pour animaux et son procédé de fabrication**
Tränkebecken und dessen Herstellungsverfahren
Drinking bowl and process for producing the same

(30) Priorité: 01.07.1998 FR 9808397
(43) Date de publication de la demande: 12.01.2000
(60) Demande divisionnaire: 01203451.8
(73) Titulaire: La Buvette, 08090 Tournes (FR)
(72) Inventeur: Gustin, Jean-Pierre, 08000 Charleville Mezieres (FR)
(74) Mandataire: Loyer, Bertrand

(56) Documents cités:
- EP-A- 0 087 589
- EP-A- 0 500 186

## Description

Il est connu de faire des bols d'abreuvement pour animaux notamment pour porcins constitués par un récipient à fond plat et rebord ovale, le fond plat étant, lors de la mise en place, fixé à une paroi verticale. De tels bols sont fabriqués en général en métal et sont rigidifiés par leur rebord qui est replié sur un peu plus de 180°. Des bols d'abreuvement sont connus des demandes de brevets EP-A-0087584 et EP-A-0500186

Ces pièces, étant destinées à un marché très concurrentiel, nécessitent cependant des outillages chers et complexes si l'on veut une bonne qualité d'embouti (aspect, rigidité, précision, etc...). D'autre part, comme de par leur forme ils ne sont pas assez rigides, il est nécessaire de les rigidifier en enroulant leur rebord. Non seulement cette opération est assez longue et onéreuse, mais encore, cet enroulement n'étant jamais parfait, il se forme des nids microbiens c'est-à-dire des zones qu'il n'est pratiquement pas possible de nettoyer.

La présente invention a pour objet un bol d'abreuvement en métal de fabrication simple et ne comportant pas les inconvénients cités ci-dessus.

Le bol selon l'invention est caractérisé par le fait qu'il est constitué d'un corps cylindrique de révolution (ou sensiblement cylindrique) et d'un fond comportant une portion sphérique et une partie plane (ou sensiblement sphérique) (ou sensiblement plane) contenue dans un plan faisant un angle d'environ 60° avec l'axe du cylindre, de telle sorte que, en position d'utilisation, la partie plane étant dans un plan vertical, l'axe du cylindre soit dirigé environ à 30° de l'horizontale vers le haut et la partie sphérique, située à la base de la partie plane, constitue un récipient pour l'eau d'abreuvement ; le rebord circulaire du bol étant incurvé d'environ 90° vers l'extérieur.

La présente invention concerne également le procédé de fabrication d'un tel bol d'abreuvement selon lequel dans un premier temps on découpe dans une feuille de métal un flanc circulaire plat ; dans un deuxième temps, le rebord du disque circulaire étant tenu dans un serre flanc, la pièce est emboutie au moyen d'un poinçon de section circulaire (ou sensiblement circulaire) et dont la pointe est une demi-sphère (ou sensiblement), ce qui donne un flanc en forme de cloche hémisphérique avec jupe cylindrique ; dans un troisième temps on réalise un deuxième emboutissage avec un deuxième poinçon dont l'extrémité comporte une portion hémisphérique coupée par une portion plane (ou sensiblement) contenue dans un plan faisant environ 60° avec l'axe du poinçon ; dans un quatrième temps on réalise les perçages nécessaires à la mise en place de la robinetterie.

A titre d'exemple non limitatif, et pour faciliter la compréhension de l'invention, on a représenté aux dessins annexés :
Figure 1 : une vue en élévation latérale et en coupe d'un exemple de réalisation de l'invention ;
Figure 2 : une vue schématique illustrant le premier emboutissage ;
Figure 3 : une vue schématique illustrant le deuxième emboutissage ;
Figure 4 : une vue de détail illustrant le rebord du bol selon l'invention ;
Figure 5 une vue de détail illustrant le rebord d'un bol de l'art antérieur.

En se reportant à ces figures on voit que le bol d'abreuvement selon l'invention est en deux parties : une première partie 1 qui est un cylindre de révolution d'axe X-X et une deuxième partie 2, qui constitue le fond du bol, cette partie comportant une portion sphérique 3 et une portion plane 4. Ces deux parties sont séparées par le plan P-P qui est perpendiculaire à l'axe X-X du cylindre de révolution 1. La partie plane 4 est contenue dans un plan T-T qui fait avec l'axe X-X un angle d'environ 60° et donc un angle complémentaire d'environ 30° avec le plan P-P.

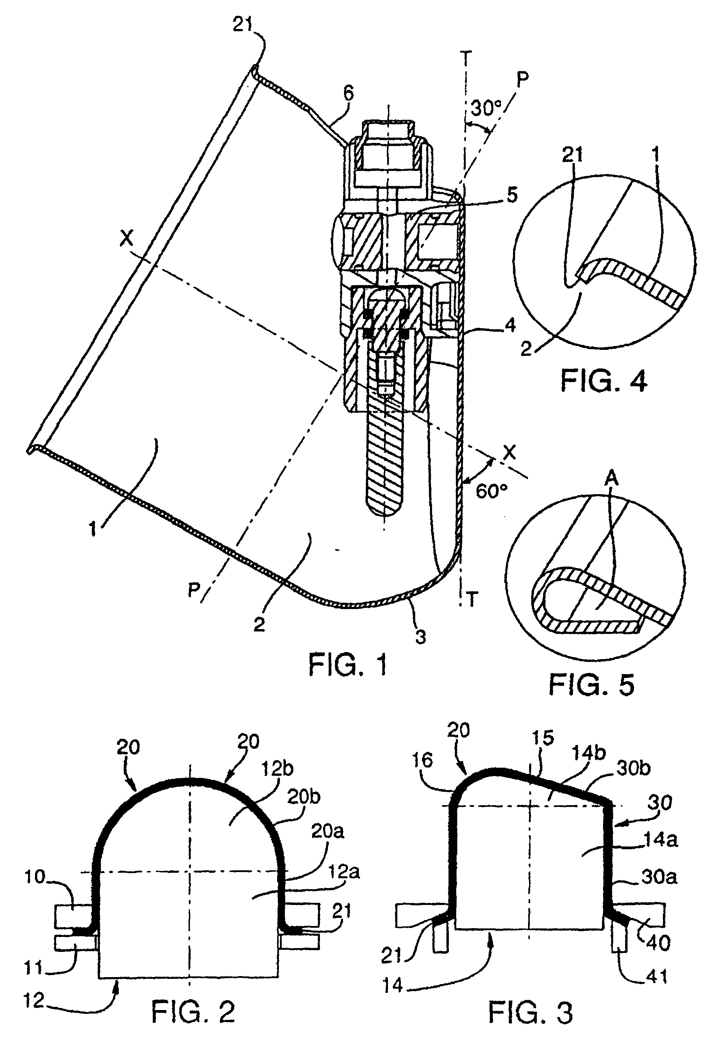

Lorsque le bol est en position d'utilisation, qui est celle représentée à la figure 1, la partie plane 4 est en position verticale, par exemple fixée à une paroi verticale (non représentée) telle que le mur d'une porcherie, et du fait de l'inclinaison vers le bas de l'axe X-X, la portion sphérique 3 qui est en position inférieure constitue un récipient pouvant recevoir l'eau d'abreuvage.

La robinetterie usuelle 5 est fixée à la paroi plane 4 et fait saillie hors du bol par un orifice 6 ménagé à travers la paroi supérieure de la partie cylindrique 1.

Les figures 2 et 3 sont destinées à illustrer le procédé de fabrication du bol de la figure 1.

Dans un premier temps, on découpe dans une feuille de métal et de préférence d'acier inoxydable un flanc constitué par un disque circulaire.

Dans un deuxième temps, on fixe ce flanc au moyen d'un serre-flanc 11 et on procède à un premier emboutissage au moyen d'un poinçon 12. Ce poinçon comporte une première partie 12a qui est un cylindre de révolution et une deuxième partie 12b qui est une demi-sphère dont le rayon est égal à celui de la partie 12a. On obtient ainsi une ébauche 20 qui a une forme en cloche correspondant à celle du poinçon 12, c'est-à-dire une partie 20a, cylindrique de révolution et une partie 20b qui est une demi-sphère. Cette ébauche 20 comporte un rebord circulaire 21, serré entre la matrice 10 et le serre-flanc 11, qui est recourbé pratiquement à 90° par rapport à la paroi cylindrique 20a.

Dans un troisième temps, l'ébauche 20 est soumise à un deuxième emboutissage au moyen d'un deuxième poinçon 14. Ce deuxième poinçon 14 est également en deux parties : une première partie 14a qui est un cylindre de révolution ayant un diamètre plus petit que celui de la partie 12a du poinçon précédent 12, mais une longueur plus grande et une deuxième partie 14b qui est elle-même en deux portions : une portion plane 15 et une portion hémisphérique 16 dont le rayon est différent que celui de la demi-sphère 12b.

La partie plane 15 est contenue dans un plan qui fait un angle d'environ 60° avec l'axe du poinçon 14.

Pour ce deuxième emboutissage, l'ébauche 20 est tenu dans une matrice 40 et un serre-flanc 41 qui maintiennent le rebord 21 de la nouvelle ébauche 30 en lui donnant, par rapport aux parois cylindriques 30a de l'ébauche 30, un angle un peu inférieur à 90°.

Il s'avère que ce deuxième emboutissage qui se traduit par un étirage de l'ébauche 20 pour obtenir l'ébauche 30, a pour effet un épaississement du rebord 21, compensé par un léger amincissement des parois des parties 30a et 30b.

Ainsi, avec une tôle de 12 dixièmes de millimètre, le bord 21 atteint une épaisseur de pratiquement 14 dixièmes.

Les bols emboutis de type connu sont ovales, ce qui a pour résultat qu'ils résistent mal aux efforts de déformation ; de sorte qu'il est nécessaire de les rigidifier. Pour cela, on enroule leur rebord en le repliant sur plus de 180° comme cela est illustré à la figure 5. Cette façon de procéder présente deux inconvénients : cet enroulage est relativement onéreux et crée un espace A qui est difficilement nettoyable et qui devient vite un foyer microbien.

Par contre, le bol selon l'invention étant cylindrique dans sa partie en contact avec les animaux, est auto-résistant et son rebord 21 n'a pas besoin d'être enroulé (d'autant moins qu'il est épaissi). Cela est moins cher et plus hygiénique.

Pour éviter que le rebord 21 soit coupant, un billage peut être effectué pour en arrondir les arêtes.

## Revendications

1. Bol d'abreuvement pour animaux notamment pour porcins en métal **caractérisé par le fait qu'**il est constitué d'un corps sensiblement cylindrique de révolution (1) et d'un fond (2) comportant une portion sensiblement sphérique (3) et une portion sensiblement plane (4), contenue dans un plan (T-T) faisant un angle d'environ 60° avec l'axe (X-X) du cylindre (1).

2. Bol selon la revendication 1 **caractérisé par le fait que** le rebord (21) de la portion cylindrique (1) est incurvé vers l'extérieur d'environ 90°.

3. Bol selon la revendication 1 ou 2 **caractérisé par le fait que** le bol peut être monté avec la paroi plane (4) en position verticale, l'axe (X-X) de la partie cylindrique (1) étant inclinée vers le bas d'environ 30° par rapport à l'horizontale ; la partie sphérique (3) se trouvant en position inférieure et constituant un récipient recueillant l'eau d'abreuvement.

4. Procédé de fabrication du bol selon les revendications 1 à 3 selon lequel :
dans un premier temps, on découpe dans une feuille de tôle en métal un flanc circulaire plat ; dans un deuxième temps, le rebord (21) du disque circulaire étant tenu par un serre-flanc (11) le flanc est embouti au moyen d'un poinçon (12) de section circulaire dont l'extrémité (12b) est une demi-sphère ; dans un troisième temps, l'ébauche (20) précédemment obtenue est soumise à un deuxième emboutissage avec un deuxième poinçon (14) dont l'extrémité comporte une partie plane (15) et une partie sphérique (16).

5. Procédé selon la revendication 4, selon lequel la partie cylindrique (14a) du deuxième poinçon (14) a une longueur supérieure à celle de la partie cylindrique (12a) du premier poinçon (12).

6. Procédé selon la revendication 5, selon lequel le rayon de courbure de la partie hémisphérique (16) du deuxième poinçon peut être différent de celui de la partie en demi-sphère du premier poinçon (12).

## Patentansprüche

1. Metallschale für eine Tiertränke, insbesondere für Ferkel, **gekennzeichnet durch** ein im wesentlichen zylindrisches Gefäß (1) mit einem Boden (2) aus einem im wesentlichen sphärischen Bereich (3) und einem im wesentlichen ebenen Bereich (4), der in einer unter einem Winkel von ungefähr 60 ° mit der Achse (X-X) des zylindrischen Gefäßes (1) verlaufenden Ebene (T-T) liegt.

2. Schale nach Anspruch 1, **gekennzeichnet durch** einen nach außen um ungefähr 90 ° abgebogenen Rand (21) des zylindrischen Gefäßes (1).

3. Schale nach Anspruch 1 oder 2, **dadurch gekennzeichnet, daß** sich die Schale mit dem ebenen Bereich (4), senkrecht stehend anordnen läßt, wobei die Achse (X-X) des zylindrischen Gefäßes (1) gegenüber der waagerechten um ungefähr 30 ° nach unten geneigt ist und der sphärische Bereich (3) nach unten gerichtet ist und den Behälter zur Aufnahme des Trinkwassers darstellt.

4. Verfahren zur Herstellung der Schale nach den Ansprüchen 1 bis 3 mit den Schritten:
- Im ersten Schritt wird aus einem Metallblech ein ebener, kreisförmiger Zuschnitt ausgestanzt.
- Im zweiten Schritt wird der Zuschnitt mittels eines Stempels (12) mit Kreisquerschnitt und einem halbkugelförmigen Ende (12b) tiefgezogen, wobei der Rand (21) des kreisförmigen Zuschnitts mittels eines Niederhalters (11) gehalten wird.
- Im dritten Schritt wird das vorgepreßte Teil (20) einem zweiten Tiefziehschritt mittels eines zweiten Stempels (14) unterzogen, dessen Ende einen ebenen Bereich (15) und einen sphärischen Bereich (16) aufweist.

5. Verfahren nach Anspruch 4, bei dem der zylindrische Bereich (14a) des zweiten Stempels (14) eine größere Länge als der zylindrische Bereich (12a) des ersten Stempels (12) aufweist.

6. Verfahren nach Anspruch 5, bei dem der Krümmungsradius des sphärischen Bereichs (16) des zweiten Stempels (14) unterschiedlich von dem des halbkugelförmigen Bereichs des ersten Stempels (12) sein kann.

## Claims

1. A metal drinking bowl for animals, in particular for pigs, **characterised by** the fact that it is composed of a substantially cylindrical body generated by rotation (1) and of a base (2) comprising a substantially spherical portion (3) and a substantially planar portion (4) included in a plane (T-T) forming an angle of about 60° with the axis (X-X) of the cylinder (1).

2. A bowl according to Claim 1, **characterised by** the fact that the edge (21) of the cylindrical portion (1) is curved outwards by about 90°.

3. A bowl according to Claim 1 or 2, **characterised by** the fact that the bowl may be mounted with the planar wall (4) in the vertical position, the axis (X-X) of the cylindrical part (1) being inclined downwards at an angle of about 30° relative to the horizontal, the spherical part (3) being positioned inferiorly and constituting a container for collecting the drinking water.

4. A method of manufacturing the bowl according to Claims 1 to 3 in accordance with which: a flat circular blank is first of all cut from a sheet of metal; secondly, while the edge (21) of the circular disc is held by a blank holder (11); secondly, the blank is stamped with a punching die (12) of circular section, the extremity (12b) of which is a hemisphere; thirdly, the rough shaping (20) previously obtained is subjected to a second stamping with a second punching die (14), the end of which consists of a planar part (15) and a spherical part (16).

5. A method according to Claim 4, in accordance with which the cylindrical part (14a) of the second punching die (14) is longer than that of the cylindrical part (12a) of the first punching die (12).

6. A method according to Claim 5, in accordance with which the radius of curvature of the hemispherical part (16) of the second punching die may be different from that of the hemispherical part of the first punching die (12).
